# EUROPÄISCHE PATENTSCHRIFT

(11) **EP 1 083 728 B1**
(45) Veröffentlichungstag und Bekanntmachung des Hinweises auf die Patenterteilung: **18.11.2009**
(21) Anmeldenummer: 00118553.7
(22) Anmeldetag: 26.08.2000
(51) Int. Cl.: H04M 1/725, H04M 1/274

(54) **Anordnung zur Nutzung einer Mehrzahl von modifizierbaren Einstellungen**
Arrangement for using a plurality of modifiable settings
Arrangement pour l'utilisation d'une pluralité de valeurs modifiables

(30) Priorität: 10.09.1999 DE 19943342
(43) Veröffentlichungstag der Anmeldung: 14.03.2001
(73) Patentinhaber: Nokia Corporation, 02150 Espoo (FI)
(72) Erfinder: Pietruszka, Jörg, 44809 Bochum (DE)
(74) Vertreter: Becker Kurig Straus

(56) Entgegenhaltungen:
- DE-A- 19 531 415
- GB-A- 2 315 954
- US-A- 5 239 700

## Beschreibung

### Technisches Gebiet

Die Erfindung befasst sich mit Anordnungen, mit denen zur Nutzung eine Mehrzahl von modifizierbaren Einstellungen vorgenommen werden können, wobei wenigstens einige dieser Einstellungen als Individualwerte in einem Speicher abgelegt sind und als solche einem Nutzer als Vorgabewerte zur Verfügung stehen bzw. zur Verfügung gestellt werden.

### Stand der Technik

Aus der Druckschrift US 5,239,700 ist ein Fahrzeuginformationssystem bekannt, bei dem eine Eingabevorrichtung mit einem Monitor verbunden ist, der ausgewählte Informationen visuell darstellen kann. Eingabevorrichtungen, die mit geringer visueller Aufmerksamkeit und wenig manueller Geschicklichkeit bedienbar sind, können schnurlos mit dem System verbunden sein.

Gemäß dem Stand der Technik sind Anordnungen gemäß dem Oberbegriff weitgehend bekannt. So ist es beispielsweise in der Fernsehtechnik geläufig, dass, wenn ein Nutzer von beispielsweise Werkseinstellungen abweichende Individualeinstellungen generiert, diese als Individualeinstellungen bzw. Individualwerte auf Wunsch gespeichert und dem Nutzer bei einer späteren Nutzung der Anordnung wieder zur Verfügung gestellt werden. Auch wird dieses Prinzip in der Automobiltechnik genutzt, indem beispielsweise die Sitz-, Lenkrad- und/oder Spiegeleinstellung entsprechend den Vorgaben der Fahrer gespeichert werden. Wechselt dann der Fahrer und sind für diesen Fahrer Individualwerte bereits abgelegt worden, kann der neue Fahrer die auf eine Person abgestimmten Individualwerte aus dem Speicher aufrufen, womit dann über entsprechende Stellmotoren die den Individualwerten entsprechenden Einstellungen ausgeführt werden. Wie leicht einzusehen ist, sind zur Abspeicherung der Individualwerte entsprechende Speicher erforderlich. Außerdem sind zur Einstellung der Individualwerte entsprechende Bedienanordnungen notwendig. Da bei Herstellung der entsprechenden Anordnungen oftmals nicht klar ist, in welchem Zusammenhang die jeweilige Anordnung genutzt bzw. mit welchen anderen Anordnungen die jeweilige Anordnung betrieben werden soll, wird jede dieser Anordnungen mit einem Speicher und einer entsprechenden Bedienanordnung ausgestattet, womit dann der Aufwand je Anordnung relativ groß ist.

Daher liegt der Erfindung die Aufgabe zugrunde, Anordnungen anzugeben, die bei Verwendung von mindestens zwei - nicht notwendig baugleichen - Anordnungen den Aufwand reduzieren.

### Darstellung der Erfindung

Diese Aufgabe wird mit den Merkmalen gemäß Anspruch 1 oder Anspruch 5 gelöst. Vorteilhafte Aus- und Weiterbildungen sind den Ansprüchen 2 bis 4 oder 6 bis 9 entnehmbar.

Der Aufwand für die Speicherung von Individualwerten ist erheblich vereinfacht, wenn der über eine Tastatur eines Telefons ansprechbare und zur Aufnahme von Telefonnummern bestimmte Speicher eines Telefons verwendet wird und dort die jeweiligen Individualwerte wie Telefonnummern abgelegt werden. Insbesondere ist dabei die Nutzung von für die Speicherung von Telefonnummern bestimmten Speicherplätzen eines Mobiltelefons von Vorteil. Zum einen stehen in Mobiltelefonen dort für diese Zwecke eine nahezu unbegrenzte Anzahl von Speicherplätzen zur Verfügung. Außerdem bietet sich die Speicherung von Individualwerten auf Speicherplätzen des Mobiltelefons deshalb an, weil derartige Geräte vom Nutzer ständig mitgeführt werden und daher die Gewähr dafür sind, dass andere Anordnungen auf seine ganz speziellen Bedürfnisse eingerichtet werden, sobald den anderen Anordnungen auf Speicherplätzen des "Telefonregisters" abgelegte Individualwerte zur Verfügung gestellt werden. Dies kann beispielweise in einer typischen Kraftfahrzeugsituation bedeuten, dass nachdem der Fahrer A das Fahrzeug verlassen hat und der Fahrer B das Fahrzeug nutzen will, die auf die Bedürfnisse des Fahrers B abstellten optimalen Einstellungen der Sitzposition oder auch des Radioprogramms vorgenommen werden, wenn das Mobiltelefon über eine Schnittstelle im Fahrzeug mit diesem in Verbindung tritt. Dadurch, dass das Mobiltelefon selbst über eine Tastatur und in aller Regel auch über ein Display verfügt, kann die Einstellung der jeweiligen Individualwerte der verschiedenen Anordnungen zumindest teilweise über das Mobiltelefon ausgeführt werden. Letzteres ist insbesondere im Kraftfahrzeugbereich von Vorteil, weil dadurch Bedienanordnungen, die sonst zur Bedienung dieser Anordnungen bzw. zur Auslösung der hinterlegten Individualeinstellungen erforderlich sind, gänzlich entfallen oder zumindest teilweise eingespart werden.

Schon dieser Stelle sei darauf hingewiesen, dass durch die Nutzung der sonst zur Speicherung von reinen Telefonnummern verwendeten Speicherplätze eine Modifikation des Telefons entfällt. Insbesondere kann jedes Telefon, welches über einen Rufnummernspeicher verfügt, im Zusammenhang mit der Erfindung benutzt werden. Dies heißt aber nicht, dass die Erfindung auf Telefone beschränkt wird, die lediglich mit einem Rufnummernspeicher versehen sind. Halben die verwendeten Telefone neben dem reinen Rufnummernspeicherbereich auch noch einen von diesem verschiedenen Speicherbereich zur Aufnahme von Werten für Individualeinstellungen, wird die Benutzerführung bei der Speicherung von Individualwerten erheblich verbessert, da in diesem Fall für die Speicherung von Individualwerten eine Menueführung möglich wird.

Ist eine Einheit vorhanden, die zwischen gespeicherten Telefonnummern und Individualwerten unterscheidet und die bei festgestellten Individualwerten die jeweiligen Einstellungen veranlasst, wird sichergestellt, dass bei Verbindung der mit dem "Telefonregister" versehenen Anordnung mit einer entsprechenden Schnittstelle, die die Verbindung zu den anderen Anordnungen herstellt, die jeweiligen Einstellungen sehr schnell ausgeführt werden.

Dies kann so realisiert sein, dass die Einheit eine Auswerteschaltung ist, die anhand der Anzahl der auf den verschiedenen Speicherplätzen abgelegten Nummern zwischen einer typischen Telefonnummer und Nummern, die Individualwerte für bestimmte Einstellungen repräsentieren, unterscheidet.

Eine schnelle Individualeinstellung ist auch dann gegeben, wenn im Speicher bzw. dem "Telefonregister" bestimmte Speicherplätze zur Aufnahme von Individualwerten reserviert sind, weil in diesem Fall nicht das gesamte "Telefonregister", sondern nur einige wenige Speicherplätze durchsucht werden müssen, wenn die mit dem "Telefonregister" versehene Anordnung über eine Schnittstelle mit einer oder mehreren Anordnungen in Verbindung tritt.

### Kurze Darstellung der Figuren

Es zeigen:
- Fig. 1: ein Ausführungsbeispiel gemäß der Erfindung
- Fig. 2: eine weiteres Ausführungsbeispiel gemäß Fig. 1
- Fig. 3: noch ein Ausführungsbeispiel gemäß der Erfindung

### Wege zum Ausführen der Erfindung

Die Erfindung soll nun anhand der Figuren näher erläutert werden.

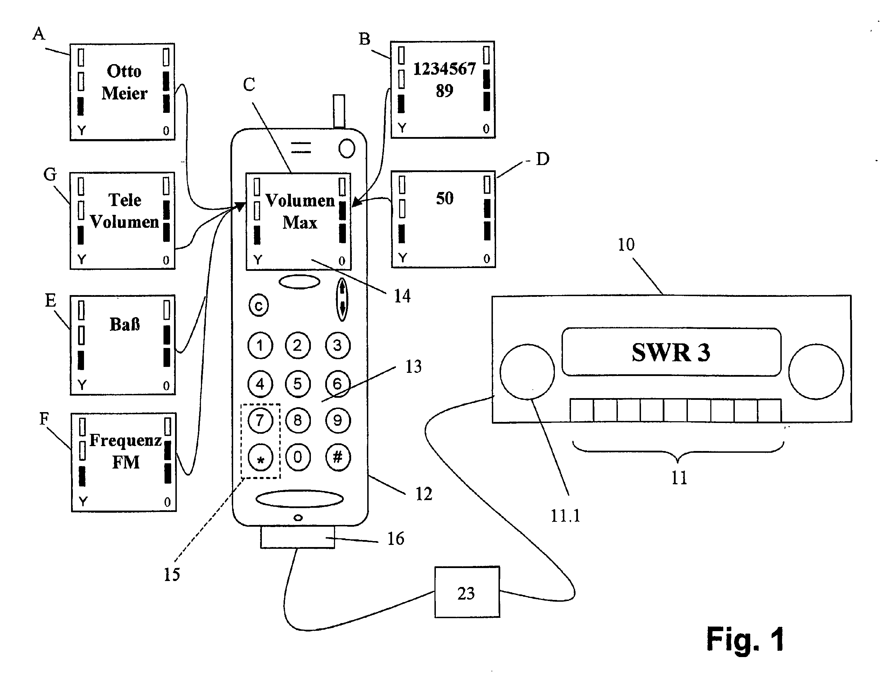

In Fig. 1 ist eine Anordnung (10) in der Form eines Autoradios gezeigt, welche eine Mehrzahl von Mitteln (11) zur Vornahme von Einstellungen aufweist. Außerdem verfügt die Anordnung (10) über einen Speicher (nicht dargestellt), in dem bestimmte Einstellungen, die ein Nutzer vorgenommen hat, als Individualwerte ablegbar sind. Hat ein Nutzer den Speicher (nicht dargestellt) mit Individualwerten belegt, so werden einem Nutzer die mit den Individualwerten korrespondierenden Einstellungen als Vorgabewerte immer dann zur Verfügung gestellt, wenn er die Anordnung in Betrieb nimmt. Dies bedeutet beispielsweise, dass bei in Betriebnahme der Anordnung (10) immer der Radiosender SWR 3 als Vorgabewerte gesucht und zur Verfügung gestellt wird. Hat der Nutzer außerdem auch noch eine Lautstärkenbegrenzung voreingestellt, kann er trotz der Betätigung des entsprechenden Mittels 11.1 zur Veränderung der Lautstärke diese nicht über den voreingestellten Pegel anheben.

Ferner ist in Fig. 1 ein Mobiltelefon (12) gezeigt, welches im wesentlichen über eine Tastatur (13), ein Display (14) und einen Speicher (15) zur Aufnahme von Telefonnummern aufweist. Der Speicher (15) dieses handelsüblichen Mobiltelefons (12) kann mit einer Mehrzahl von Telefonbucheinträgen belegt werden, indem beispielsweise neben der eigentlichen Rufnummer auch der Name der mit dieser Rufnummer verbundenen Person abgelegt wird. Hat der Nutzer beispielsweise unter dem Namen Otto Meier die Rufnummer 123456789 im Speicher (15) abgelegt, kann er sich je nach Ausbildung des Mobiltelefons (12) bzw. dessen Einstellungen zur Herstellung eines Gesprächs entweder die gespeicherte Rufnummer, den mit der Rufnummer verbundenen Namen oder beides auf dem Display (14) anzeigen lassen. Um die alternative Darstellungsweise des in Fig. 1 verwendeten Mobiltelefons (12) zu verdeutlichen, ist bei der Displaydarstellung A der Namensanzeigemodus und bei der Displaydarstellung B der Rufnummernanzeigemodus gezeigt.

Außerdem ist der Darstellung gemäß Fig. 1 entnehmbar, dass das Mobiltelefon (12) über eine Schnittstelle (16) mit der Anordnung (10) verbunden ist. Will nun ein Nutzer sicherstellen, dass beispielsweise durch manuelle Einstellungen an der Anordnung (10) beispielsweise das Volumen nie höher als 50% des Maximalvolumens angehoben werden kann, sind folgende Schritte erforderlich: Genau wie bei der Speicherung einer Kombination aus Rufnummer und Namen wird je nach Ausbildung des Mobiltelefons (12) entweder zuerst die Rufnummer und dann der Name bzw. umgekehrt eingegeben, wobei allerdings als Name ein die jeweilige Funktion kennzeichnender Begriff eingegeben werden muss. Da im in Fig. 1 gezeigten Ausführungsbeispiel für die gewünschte Volumenbegrenzung der kennzeichnende Begriff "Volumen Max" sein soll, kann der Nutzer, wenn er tatsächlich eine Begrenzung der maximalen Lautstärke auf 50% herbeiführen will, unter dem Namen "Volumen Max" als "Rufnummer" beispielsweise über die Tastatur (13) eine 50 eingeben. Kann auf dem Display (14) des Mobiltelefons (12) gemäß Fig. 1 entweder nur der Name oder die Rufnummer sichtbar gemacht werden, würde sich, wenn der Nutzer wie oben beschrieben vorgegangen ist, im Namensanzeigemodus die Darstellung auf dem Display (14) zeigen, welche in Fig. 1 mit C bezeichnet ist, während im Rufnummeranzeigemodus die die Ziffernfolge "50" zeigende Darstellung D auf dem Display (14) erscheint.

In gleicher Weise könnte der Nutzer auch Klangeinstellungen vornehmen, indem er etwa unter dem Namen Baß (Darstellung E) über die Tastatur (13) des Mobiltelefons (12) einen entsprechenden Wert eingibt.

Auch ist es möglich, beispielsweise unter dem Namen Frequenz FM eine Frequenzangabe für einen Radiosender im Speicher (15) des Mobiltelefons (12) abzulegen. Dies ist in der Darstellung F verdeutlicht.

In einem weiteren Ausführungsbeispiel kann der Begriff "Tele Volumen" (Darstellung G) die Funktion besitzen, dass bei einer vorhandenen Freisprecheinrichtung und Wiedergabe des Telefontons über die mit der Anordnung (10) verbundenen Lautsprecher (alles nicht gezeigt), bei geführten Telefongesprächen immer dann, wenn die per Hand eingestellte Lautstärke unterhalb des Wertes liegt, der über die Tastatur (13) eingegeben wurde, zur Hebung der Verständlichkeit die Lautstärke auf den eingegebenen Wert angehoben wird.

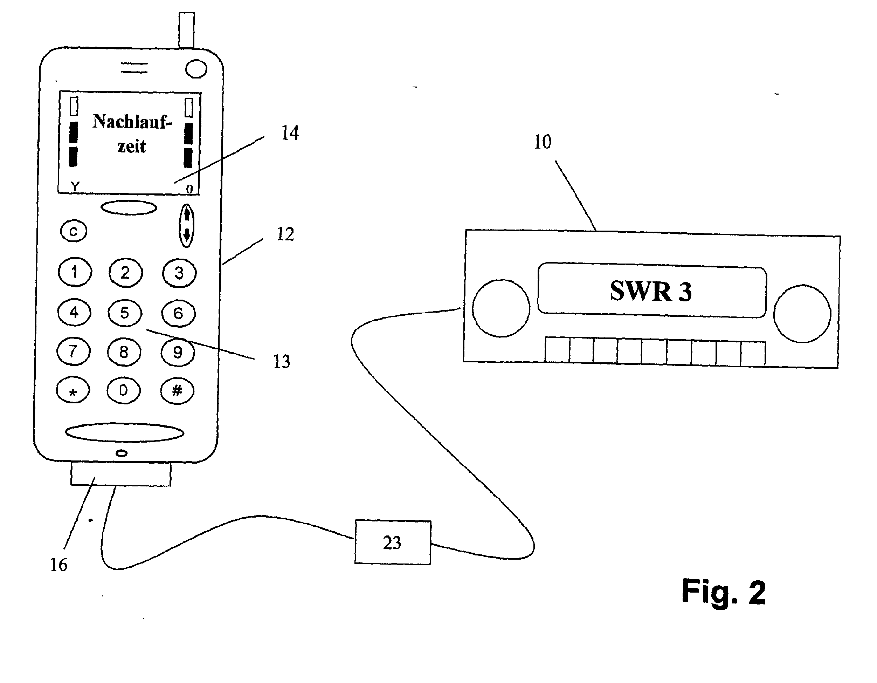

Eine weitere Anwendung für die Erfindung ist in Fig. 2 gezeigt. Dort ist auf dem Display (13) das Wort "Nachlaufzeit" zu sehen. Hat ein Nutzer unter diesem Begriff mit der Tastatur (13) etwa einen Zeitraum von 45 Minuten eingegeben, führt dies dazu, dass das Mobiltelefon (12) 45 Minuten nach Abstellen des Radios und/oder der Zündung eines Kraftfahrzeugs noch für Gespräche betriebsbereit bleibt. Diese Bereitschaft des Mobiltelefons (12) führt dazu, dass auch während kurzzeitiger Fahrtunterbrechungen die Nutzbarkeit des Mobiltelefons (12) erhalten bleibt. Dadurch, dass das Mobiltelefon (12) während der eingegebenen Nachlaufzeit noch aktiv bleibt, ist mit keiner wesentlichen Erhöhung des Diebstahlsrisikos verbunden, da die einstellbaren Zeitspannen für die Nachlaufzeit relativ gering sind.

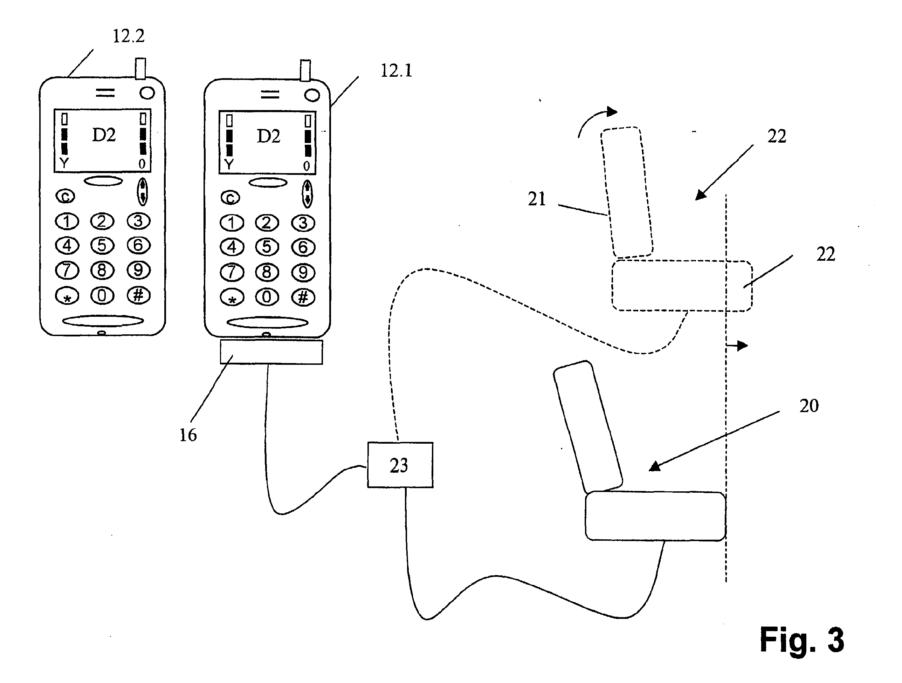

Das Ausführungsbeispiel gemäß Fig. 3 unterscheidet sich von den vorherigen Beispielen dadurch, dass das Mobiltelefon 12.1 über die Schnittstelle (16) mit dem elektrisch verstellbaren Fahrersitz (20) eines Kraftfahrzeugs (nicht dargestellt) verbunden ist. Die gezeigte Sitzposition des Fahrersitzes (20) ist beispielsweise unter dem Begriff "Sitzeinstellung" mit der Ziffernfolge 182783464 im Speicher (15) des Mobiltelefons 12.1 gespeichert. Ist auch im Mobiltelefon (12.2) unter dem Begriff "Sitzeinstellung" beispielsweise die Ziffernfolge 374745 abgelegt, führt diese Einstellung dazu, dass, wenn das Mobiltelefon (12.2 ) mit der Schnittstelle (16) verbunden wird, die bisherige Einstellung des Fahrersitzes (20) (in Fig. 3 durchgezogen gezeigt) entsprechend der im Mobiltelefon (12.2) hinterlegten Ziffernfolge 374745 verändert wird. Diese Veränderungen in der Form des Vorschiebens der Sitzfläche (21) und der Vergrößerung der Steilheit der Sitzlehne (22) sind in Fig. 3 gestrichelt dargestellt. Auch wenn eine Eingabe einer die jeweilige Sitzeinstellung herbeiführenden Ziffernfolge unter dem Begriff "Sitzeinstellung" möglich ist, muss dies wegen der für die komplexe Sitzeinstellung erforderlichen langen Ziffernfolge als unpraktisch angesehen werden. Zwar könnte dieses Problem dadurch entschärft werden, wenn die für die Sitzeinstellung maßgeblichen Einstellungen getrennt nach den Begriffen "Sitzhöhe", "Lehnenneigung", usw. eingegeben werden. Wesentlich vorteilhafter ist es aber, wenn die komplette vom Fahrer vorgenommene Sitzeinstellung als Ziffernfolge vom Fahrzeug bereitgestellt wird und als solche unter dem Begriff "Sitzeinstellung" dem jeweils mit der Schnittstelle (16) verbundenen Mobiltelefon (12) zur Verfügung gestellt und dort gespeichert wird.

Nur der Vollständigkeit halber sei darauf hingewiesen, dass die Übergabe von Ziffernfolgen an das jeweilige Mobiltelefon (12) bzw. dessen Speicher (15) nicht nur auf die vorstehende Sitzeinstellung beschränkt ist. Vielmehr kann die Übergabe auch für beispielsweise an der Anordnung gemäß Fig. 1 vorgenommenen Einstellungen eingesetzt werden. Wesentlich dabei in beiden Fällen ist lediglich, dass bei der Übergabe von Ziffernfolgen zum jeweiligen Mobiltelefon (12) reservierte Begriffe ("Volumen Max", "Baß", "Sitzeinstellung") mit den jeweiligen Ziffernfolgen verbunden werden.

Hat die Anordnung (10) selbst einen Speicher (nicht dargestellt), in dem bestimmte Vorgabewerte abgelegt sind, können diese Vorgabewerte in der oben beschriebenen Weise an das Mobiltelefon (12) übergeben werden, sobald das Mobiltelefon (12) mit der Schnittstelle (16) verbunden wird. Zur Verdeutlichung sei aber darauf hingewiesen, dass ein Speicher für Vorgabewerte in der Anordnung (10) selbst nicht notwendig ist. Ebene sind auch bei der Anordnung (10) keine Mittel (11) zur manuellen Eingabe erforderlich, da die gesamte Eingabe über die Tastatur (13) des Mobiltelefons (12) erfolgen kann.

Abschließend soll noch auf die Vorgange eingegangen werden, die ablaufen, wenn beispielsweise ein Mobiltelefon (12) gemäß Fig. 1 mit der Schnittstelle (16) verbunden bzw. ein Kraftfahrzeug, bei dem das Mobiltelefon (12) bereits mit der Schnittstelle (16) verbunden ist, gestartet wird. Zur Herbeiführung der in Speicher (15) des Mobiltelefons (12) abgelegten Einstellungen, werden die jeweiligen Begriffe "Volumen Max", "Sitzeinstellung", usw. zusammen mit den entsprechenden Ziffernfolgen über die Schnittstelle (16) an die Einheit (23) gegeben. Da die jeweiligen Begriffe reservierte Begriffe sind, werden lediglich die dazu hinterlegten Ziffernfolgen ausgewertet und nach entsprechender Auswertung und/oder Umsetzung zur Herbeiführung der entsprechenden Einstellungen in Fig. 1 an die Anordnung (10) oder gemäß Fig. 3 an die Stellmotoren (nicht dargestellt) übergeben.

## Patentansprüche

1. Verfahren, umfassend
- Verbinden einer Anordnung (10, 20) mit einem Mobiltelefon (12), das Individualwerte, die modifizierbare Einstellungen repräsentieren, als Telefonnummern, und kennzeichnende Begriffe als damit verbundene Namen speichert;
**gekennzeichnet durch**
- Übertragen, basierend auf den kennzeichnenden Begriffen, von Individualwerten, die modifizierbare Einstellungen repräsentieren, von dem Mobiltelefon (12) an die verbundene Anordnung (10, 20); und
- Modifizieren von entsprechenden modifizierbaren Einstellungen in einem Speicher (100) der Anordnung (10, 20) demgemäß.

2. Verfahren nach Anspruch 1, wobei eine modifizierbare Einstellung eine Sitzeinstellung ist, auf welche ein elektrisch einstellbarer Fahrersitz (20) anspricht.

3. Verfahren nach Anspruch 1, wobei modifizierbare Einstellungen Lautstärke und Frequenz eines Autoradios (10) einschließen.

4. Verfahren nach Anspruch 1, wobei eine modifizierbare Einstellung die Nachlaufzeit ist, für welche eine Freisprecheinrichtung eines Kraftfahrzeugs nach dem Abschalten der Zündung des Kraftfahrzeugs betriebsbereit ist, wodurch das Mobiltelefon (12) für den Zeitraum betriebsbereit ist, der durch die Nachlaufzeit bestimmt wird.

5. Anordnung, umfassend
- einen Speicher (100), der zum Speichern einer Anzahl von modifizierbaren Einstellungen als Individualwerte angepasst ist;
**dadurch gekennzeichnet, dass**
- die Anordnung (10, 20) angepasst ist, um mit einem Mobiltelefon (12) verbunden zu werden, das Individualwerte, die modifizierbare Einstellungen repräsentieren, als Telefonnummern, und kennzeichnende Begriffe als damit verbundene Namen speichert, und um basierend auf den kennzeichnenden Begriffen Individualwerte, die modifizierbare Einstellungen repräsentieren, von dem Mobiltelefon (12) zu übertragen, um entsprechende modifizierbare Einstellungen in dem Speicher (100) der Anordnung demgemäß zu modifizieren.

6. Anordnung nach Anspruch 5, wobei die Anordnung ein elektrisch einstellbarer Fahrersitz (20) ist und wobei eine modifizierbare Einstellung eine Sitzeinstellung ist, auf welche der elektrisch einstellbare Fahrersitz (20) anspricht.

7. Anordnung nach Anspruch 5, wobei die Anordnung ein Autoradio (10) ist, und wobei modifizierbare Einstellungen des Autoradios (10) Lautstärke und Frequenz einschließen.

8. Anordnung nach Anspruch 5, wobei die Anordnung eine Freisprecheinrichtung eines Kraftfahrzeugs ist und wobei eine modifizierbare Einstellung die Nachlaufzeit ist, für welche die Freisprecheinrichtung nach dem Abschalten der Zündung des Kraftfahrzeugs betriebsbereit ist, wodurch das Mobiltelefon (12) für den Zeitraum betriebsbereit ist, der durch die Nachlaufzeit bestimmt wird.

9. System, umfassend:
- mindestens eine Anordnung (10, 20) nach einem der Ansprüche 5 bis 8; und
- ein Mobiltelefon (12), umfassend
- einen Speicher (15), der zum Speichern von Telefonnummern und mit den Telefonnummern verbundenen Namen angepasst ist;
- eine Tastatur (13) zum Ansprechen des Speichers; und
- eine Schnittstelle (16), die zum Verbinden mit der mindestens einen Anordnung (10, 20) angepasst ist;
wobei das Mobiltelefon (12) angepasst ist, Individualwerte, die modifizierbare Einstellungen repräsentieren, als Telefonnummern, und kennzeichnende Begriffe als damit verbundene Namen in dem Speicher (15) zu speichern.

## Claims

1. A method comprising
linking an arrangement (10, 20) with a mobile telephone (12), which stores individual values representing modifiable settings as telephone numbers and characterising terms as names associated therewith;
**characterised by**
transferring, based on the characterising terms, individual values representing modifiable settings from the mobile telephone (12) to the linked arrangement (10, 20); and
correspondingly modifying respective modifiable settings in a memory (100) of the arrangement (10, 20).

2. The method according to claim 1, wherein a modifiable setting is a seat setting to which responds an electrically adjustable driver's seat (20).

3. The method according to claim 1, wherein modifiable settings include volume and frequency of a car radio (10).

4. The method according to claim 1, wherein a modifiable setting is the shut-off delay for which a hands-free phone system of a motor vehicle is operable after the ignition of the vehicle has been turned off, so that the mobile telephone (12) is operable for the period which is determined by the shut-off delay.

5. An arrangement comprising
a memory (100) which is adapted for storing a plurality of modifiable settings as individual values;
**characterised in that**
the arrangement (10, 20) is adapted for linking it to a mobile telephone (12), which telephone stores individual values representing modifiable settings as telephone numbers and characterising terms as names associated therewith, and for transferring, based on the characterising terms, individual values representing modifiable settings from the mobile telephone (12), in order to correspondingly modify respective settings in the memory (100) of the arrangement.

6. The arrangement according to claim 5, wherein the arrangement is an electrically adjustable driver's seat (20), and wherein a modifiable setting is a seat setting to which responds the electrically adjustable driver's seat (20).

7. The arrangement according to claim 5, wherein the arrangement is a car radio (10), and wherein modifiable settings of the car radio (10) include volume and frequency.

8. The arrangement according to claim 5, wherein the arrangement is a hands-free phone system of a motor vehicle, and wherein a modifiable setting is the shut-off delay, for which the hands-free phone system is operable after the ignition of the vehicle has been turned off, so that the mobile telephone (12) is operable for the period which is determined by the shut-off delay.

9. A system comprising
at least one arrangement (10, 20) according to one of claims 5 to 8; and
a mobile telephone (12) comprising
a memory (15) which is adapted for storing telephone numbers and names associated with the telephone numbers;
a keypad (13) for addressing the memory; and
an interface (16) adapted for linking it with the at least one arrangement (10, 20);
wherein the mobile telephone (12) is adapted to store individual values representing modifiable settings as telephone numbers and characterising terms as names associated therewith in the memory (15).

## Revendications

1. Procédé, comportant
- une liaison d'un arrangement (10, 20) à un téléphone mobile (12) qui mémorise des valeurs individuelles, qui représentent des valeurs modifiables, en tant que numéros de téléphone, et des termes caractéristiques en tant que noms ainsi reliés ;
**caractérisé par**
- une transmission, basée sur les termes caractéristiques, des valeurs individuelles, qui représentent des valeurs modifiables, du téléphone mobile (12) à l'arrangement relié (10, 20) ; et
- une modification en conséquence des valeurs modifiables correspondantes dans une mémoire (100) de l'arrangement (10, 20).

2. Procédé selon la revendication 1, dans lequel une valeur modifiable est une valeur de siège à laquelle réagit un siège de conducteur électriquement réglable (20).

3. Procédé selon la revendication 1, dans lequel les valeurs modifiables comprennent le volume sonore et la fréquence d'un autoradio (10).

4. Procédé selon la revendication 1, dans lequel une valeur modifiable est le temps de retard pendant lequel un dispositif mains libres d'un véhicule automobile est prêt à fonctionner après la coupure de l'allumage du véhicule automobile, moyennant quoi le téléphone mobile (12) est prêt à fonctionner pendant la période de temps qui est déterminée par le temps de retard.

5. Arrangement, comportant
- une mémoire (100) qui est adaptée à enregistrer un certain nombre de valeurs modifiables en tant que valeurs individuelles ;
**caractérisé en ce que**
- l'arrangement (10, 20) est adapté à être relié à un téléphone mobile (12) qui mémorise des valeurs individuelles, qui représentent des valeurs modifiables, en tant que numéros de téléphone, et des termes caractéristiques en tant que des noms ainsi reliés, et à transmettre, sur la base des termes caractéristiques, des valeurs individuelles, qui représentent des valeurs modifiables, par le téléphone mobile (12) afin de modifier en conséquence des valeurs modifiables correspondantes dans la mémoire (100) de l'arrangement.

6. Arrangement selon la revendication 5, dans lequel l'arrangement est un siège de conducteur électriquement réglable (20) et une valeur modifiable est un réglage du siège auquel réagit le siège du conducteur électriquement réglable (20).

7. Arrangement selon la revendication 5, dans lequel l'arrangement est un autoradio (10) et des valeurs modifiables de l'autoradio (10) sont le volume sonore et la fréquence.

8. Arrangement selon la revendication 5, dans lequel l'arrangement est un dispositif mains libres d'un véhicule automobile et une valeur modifiable est le temps de retard pendant lequel le dispositif mains libres est prêt à fonctionner après la coupure de l'allumage du véhicule automobile, moyennant quoi le téléphone mobile (12) est prêt à fonctionner pendant la période de temps qui est déterminée par le temps de retard.

9. Système, comportant :
- au moins un arrangement (10, 20) selon l'une quelconque des revendications 5 à 8 ; et
- un téléphone mobile (12), comportant
- - une mémoire (15) qui est adaptée à mémoriser des numéros de téléphone et des noms liés aux numéros de téléphone ;
- - un clavier (13) pour adresser la mémoire ; et
- - une interface (16) qui est adaptée à la liaison avec le ou les arrangements (10, 20) ;
le téléphone mobile (12) étant adapté à mémoriser dans la mémoire (15) des valeurs individuelles, qui représentent des valeurs modifiables, en tant que numéros de téléphone, et des termes caractéristiques en tant que noms ainsi reliés.
